# EUROPÄISCHE PATENTSCHRIFT

(11) **EP 1 394 200 B1**
(45) Veröffentlichungstag und Bekanntmachung des Hinweises auf die Patenterteilung: **18.01.2006**
(21) Anmeldenummer: 03016564.1
(22) Anmeldetag: 24.07.2003
(51) Int. Cl.: C08K 5/56, C08L 83/07, A23G 1/22, A23G 3/02, B29C 33/40

(54) **Verwendung von Rhodium-vernetzenden Siliconelastomeren für die Herstellung von Backformen**
Use of rhodium-catalyzed siloxane elastomers for the fabrication of baking molds
Utilisation d' élastomères de polysiloxane durci en présence de rhodium pour la fabrication de moules de cuisson

(30) Priorität: 01.08.2002 DE 10235267
(43) Veröffentlichungstag der Anmeldung: 03.03.2004
(73) Patentinhaber: Wacker-Chemie GmbH, 81737 München (DE)
(72) Erfinder: Fehn, Armin, Dr., 84561 Mehring (DE); Weidinger, Jürgen, Dr., 84489 Burghausen (DE)
(74) Vertreter: Gössmann, Christoph Tassilo

(56) Entgegenhaltungen:
- EP-A2- 0 819 735
- EP-A2- 1 043 363
- FR-A1- 2 715 407
- FR-A1- 2 747 885
- FR-A1- 2 747 886
- US-A- 4 244 912
- US-A- 5 496 961
- US-A- 5 561 231

## Beschreibung

Die Erfindung betrifft Formkörper.

Formkörper, wie Gussformen für die Süßwaren-/Konditoreiindustrie, Lebensmittelformen, wie etwa zur Formgebung von Butter, Schokolade, Pralinen und Eis, Bäckereiformen und Backbleche im allgemeinen, im Folgenden - auch wenn nicht explizit zum Backen verwendet - als Backformen bezeichnet, sind wohlbekannt und werden in der Regel aus Aluminium, Gusseisen, Ton, Porzellan oder Glas hergestellt. Die Verwendung solcher Backformen hat den erheblichen Nachteil, dass das Entfernen der Lebensmittel, im Folgenden Backgut genannt, von der Backform schwierig ist, da die Backformen starr und unbeweglich sind. Zur Verbesserung wurden deshalb in einigen Fällen komplizierte Backformen entwickelt, die über einen Mechanismus zu öffnen sind und so das Backgut entfernt werden kann, was aber auch nicht optimal ist, da zum einen ein komplizierter Mechanismus nötig ist, und zum anderen nur ganz bestimmte Geometrien der Backformen möglich sind. Im EP 0 992 195 B1 wird die Verwendung von Silicon, welches durch einen Platinvernetzungsprozeß gewonnen wird, für die Herstellung von Konditorwarenformen und Backblechen beschrieben. Vorteile in Bezug auf die o. g. Backformen sind dabei, dass das Silicon elastisch ist und damit das Backgut sich sehr einfach aus der Backform entfernen lässt, zumal die Haftung des Backguts an der Siliconbackform, bedingt durch das Silicon, äußerst gering ist. Weitere Vorteile sind, dass das Silicon inert gegenüber Lebensmittel ist und als physiologisch unbedenklich gilt. Des weiteren ist Silicon einfach waschbar und weist eine gute physikalisch und chemische Beständigkeit gegen Sauerstoff, UV-Strahlung und Ozon auf. Die selben Vorteile gelten auch für Lebensmittelformen allgemein, wie etwa zur Formgebung von Butter, Schokolade/Pralinen und Eis, wobei hier noch zusätzlich der Vorteil der Kälteflexibilität von Siliconelastomeren zu tragen kommt.

Nachteile der Silicone, die mit Platin vernetzt werden, sind die Gelb- und/oder Braunfärbung der vernetzten Silicone, die insbesondere bei großvolumigen Siliconteilen visuell sichtbar sind. Die Verfärbungen werden durch das Platin, das am Ende der Vernetzung als Platinkolloid vorliegt, hervorgerufen, wie in der Literatur *J. Am. Chem. Soc.* 108 (1986) 7228ff beschrieben. Des weiteren ist bei vielen Platin vernetzten Siliconen die Transparenz herabgesetzt und die Siliconelastomere sind damit nicht durchsichtig sondern trüb, was als durchscheinend bzw. transluzent, bezeichnet wird.

Die Platinkatalysatoren haben den weiteren Nachteil, dass Siliconkautschuke, die sie enthalten, nach dem Vermischen der wesentlichen Bestandteile nur eine begrenzte Verarbeitungszeit aufweisen, weil nach dem Vermischen der einzelnen Komponenten die Platinvernetzung bereits bei Raumtemperatur einsetzt. Die Verarbeitungszeit der Massen lässt sich zwar durch Einarbeiten einer, die Wirksamkeit des Platinkatalysators hemmenden Substanz (diese werden allgemein als Inhibitoren bezeichnet) erhöhen, doch wird hierdurch dann wiederum die Härtungsgeschwindigkeit der Masse erniedrigt.

Aufgabe der Erfindung ist es daher, Formkörper aus additionsvernetzenden Siliconen zur Verfügung zu stellen, welche die oben genannten Nachteile nicht aufweisen.

Es wurde nun überraschenderweise gefunden, dass bei der Verwendung von Siliconen, die anstelle von Platin mit Rhodium- und/oder Iridium-Verbindungen vernetzt werden, oben beschriebene Nachteile und Probleme nicht auftreten.

Gegenstand der vorliegenden Erfindung sind Formkörper erhältlich durch additionsvernetzte Siliconelastomere in Gegenwart von zumindest einem Rhodium- oder Iridiumkatalysator oder Mischungen beider Katalysatorarten.

Die Verwendung von Siliconelastomeren, die durch Rhodium- und/oder Iridium-Katalyse vernetzen, zeichnet sich dadurch aus, dass die Vorteile der Silicone, wie in der Einleitung beschrieben uneingeschränkt bestehen, und zusätzlich die resultierenden Siliconelastomere extrem transparent sind, keine Verfärbungen zeigen und - auch ohne Verwendung von Inhibitoren - eine bei Raumtemperatur wesentlich längere Verarbeitungszeit haben, als die platinkatalysierten Systeme, ohne dass dadurch die Vernetzung bei höheren Temperaturen negativ beeinflusst wird.

Die mit Rodium- und/oder Iridium-Katalysatoren vernetzbaren Siliconmassen setzen sich vorzugsweise aus folgenden Bestandteilen zusammen:
(A) einem, mindestens eine ungesättigte Gruppe aufweisenden, Polydiorganosiloxan, bestehend aus chemisch miteinander verbundenen Struktureinheiten der allgemeinen Formel (1)

   RₐR¹_{b}SiO_{(4-a-b)/2} (1)
(B) ein, mindestens zwei Si-gebundene Wasserstoffatome enthaltendes Polyorganosiloxan bestehend aus chemisch miteinander verbundenen Struktur-Einheiten der allgemeinen Formel (II)

   R_{c}H_{d}SiO_{(4-c-d)/2} (2)

   und
(C) zumindest einem Rhodium- und/oder Iridium-Katalysator, der die Hydrosilylierungsreaktion katalysieren kann,

wobei
**R** gleich oder verschieden sein kann und einen von aliphatischen Kohlenstoff-Kohlenstoff-Mehrfachbindungen freien, gegebenenfalls substituierten organischen Kohlenwasserstoffrest mit bis zu 18 C-Atomen bedeutet,
**R**^{**1**} gleich oder verschieden sein kann und einen einwertigen, gegebenenfalls substituierten, gegebenenfalls über eine organische zweiwertige Gruppe an das Silizium-Atom gebundenen Kohlenwasserstoffrest mit 2 bis 14 Kohlenstoffatomen und mit aliphatischer Kohlenstoff-Kohlenstoff-Mehrfachbindung (Doppelbindung oder Dreifachbindung) bedeutet,
**a** 0, 1, 2 oder 3 ist und
**b** 0, 1 oder 2 ist
mit der Maßgabe, dass die Summe a + b kleiner oder gleich 3 ist und im Durchschnitt mindestens 2 Reste R¹ je Molekül vorliegen und
**c** 0, 1, 2 oder 3 ist und
**d** 0, 1 oder 2 ist,
mit der Maßgabe, dass die Summe von c + d kleiner oder gleich 3 ist und im Mittel mindestens zwei Si-gebundene Wasserstoffatome je Molekül vorliegen.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylrest, Xylylreste und Ethylphenylreste, und Aralkylreste, wie der Benzylrest, der α- und der β-Phenylethylrest.

Beispiele für substituierte Reste **R** sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest.

Bevorzugt handelt es sich bei Rest **R** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest **R**^{**1**} kann es sich um beliebige, einer Anlagerungsreaktion (Hydrosilylierung) mit einer SiH-funktionellen Verbindung zugängliche Gruppen handeln.

Bevorzugt handelt es sich bei Rest **R**^{**1**} um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste und substituierte Reste wie Allyloxy- und Vinyloxyreste, wobei Vinyl-, Allyl- und Hexenylreste besonders bevorzugt sind.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R¹R₂SiO_{1/2}, R¹RSiO_{2/2} und R₂SiO_{2/2} zusammengesetzt, wobei R und R¹ die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R¹SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 100 000 Pa·s, besonders bevorzugt von 0,1 bis 30000 Pa·s, jeweils bei 25°C.

Als Organosiliciumverbindung (B) können alle hydrogenfunktionellen Organosiliciumverbindungen mit einer Viskosität von 1 bis 100 000 mPa·s, bevorzugt 10 bis 10 000 mPa·s, besonders bevorzugt 50 bis 1000 mPa·s, jeweils bei 25°C, eingesetzt werden, die auch bisher in additionsvernetzbaren Massen eingesetzt worden sind.

Vorzugsweise enthält das eingesetzte Organopolysiloxan (B) Sigebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane sind vorzugsweise aus Einheiten der Formel R₃SiO_{1/2}, HR₂SiO_{1/2}, HRSiO_{2/2} und R₂SiO_{2/2} zusammengesetzt, wobei R die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, HSiO_{3/2} und SiO_{4/2} bevorzugt sind. Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen gegebenenfalls zugleich auch aliphatisch ungesättigte Gruppen enthalten. Besonders bevorzugt ist die Verwendung niedermolekularer SiH-funktioneller Verbindungen, wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 10 000 mPa·s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Silicongesamtmassen enthalten, dass das Molverhältnis von SiH-Gruppen zu aliphatisch ungesättigten Gruppen bei 0,1 bis 20, besonders bevorzugt zwischen 0,7 und 5,0, liegt.

Die eingesetzten Komponenten (A) und (B) sind handelsübliche Produkte bzw. nach in der Chemie gängigen Verfahren herstellbar.

Beispiele für die Komponente (C) sind vorzugsweise Rhodium-Verbindungen, wie [Rh(O₂CCH₃)₂]₂, Rh(O₂CCH₃)₃, Rh₂(C₈H₁₅O₂)₄, Rh(C₅H₇O₂)₃, Rh(C₅H₇O₂)(CO)₂, Rh(CO)[Ph₃P](C₅H₇O₂), Rh(CO)₂(C₅H₇O₂), RhCl₃[(R)₂S]₃, (R²₃P)₂Rh(CO)X, (R²₃P)₃Rh(CO)H und Rh₂X₂Y₄, wobei X gleich Wasserstoff, Chlor, Brom oder Jod, Y gleich Ethyl, CO, C₈H₁₄ oder 0,5 C₈H₁₂, R wie oben definiert ist und R² gleich Alkylreste, wie Methyl-, Ethyl- und Butylrest oder Arylreste, wie Phenyl- und Tolylrest oder mit Sauerstoff substituierte Reste, wie Methoxy-, Ethoxy-, und Phenoxyreste bedeuten. Bevorzugte Rhodiumkatalysatoren sind (Acetylacetonato)carbonyl-(triphenylphosphan) Rhodium (I), (Acetylacetonato) dicarbonylrhodium (I), Carbonylchlorobis(triphenylphosphan) rhodium (I), (Acetylacetonato)(1,5-cyclooctadiene)rhodium(I), Rhodium(II)acetat-Dimer, Rhodium(III)acetylacetonat und Rhodium(II)octanoate-Dimer.

Weitere Beispiele für die Komponente (C) sind vorzugsweise Iridium-Verbindungen, wie Ir(OOCCH₃)₃, Ir(C₅H₇O₂)₃, [Ir(Z)(En)₂]₂ und [Ir(Z)(Dien)]₂, wobei Z gleich Chlor, Brom, Iod oder Alkoxy, En gleich Olefin, wie Ethylen, Propylen, Buten, Cyclohexen und Cycoocten und Dien gleich Cyclooctadien bedeutet. Bevorzugte Iridiumkatalysatoren sind Chlorobis(cyclooctane)iridium(I) dimer, Chlorobis(1,5-cyclooctadiene)iridium(I) dimer und Iridium(III)acetylacetonat.

Die Menge der eingesetzten Komponente (C) richtet sich nach der gewünschten Vernetzungsgeschwindigkeit und der jeweiligen Verwendung sowie ökonomischen Gesichtspunkten. Die Massen enthalten Komponente (C) in solchen Mengen, dass ein Metallgehalt von vorzugsweise 0,05 bis 500 Gewichts-ppm (= Gewichtsteile Metall je Millionen Gewichtsteile Siliconmasse), besonders bevorzugt 0,5 bis 100 Gewichts-ppm, insbesondere 1 bis 50 Gewichts-ppm, jeweils bezogen auf das Gesamtgewicht der Masse, resultiert.

Die erfindungsgemäßen Formkörper aus Silicionelastomer können wahlweise als Bestandteil (D) alle weiteren Zusätze, die auch bisher in Siliconelastomeren eingesetzt wurden, zu einem Anteil von bis zu 70 Gew.-%, vorzugsweise 0,0001 bis 40 Gew.-%, enthalten. Diese Zusätze können z.B. aktive Füllstoffe, wie hydrophobe und hydrophile Kieselsäuren, inaktive Füllstoffe, harzartige Polyorganosiloxane, die von den Siloxanen (A), (B) und verschieden sind, Dispergierhilfsmittel, Lösungsmittel, Haftvermittler, Färbemittel wie anorganische Pigmente (z.B. Kobaltblau) und organische Farbstoffe, Weichmacher, organische Polymere, Inhibitoren, Stabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Farbstoffe, Pigmente usw. Des weiteren können Mittel zur Verbesserung der Hitzebeständigkeit und des Flammhemmvermögens, sogenannte Hitzestabilisatoren, zugesetzt werden. Es können dabei alle bisher in Siliconkautschuken verwendete Hitzestabilisatoren eingesetzt werden. Bevorzugt handelt es dabei aber um Übergangsmetallverbindungen und Ruß. Beispiele sind vorzugsweise Ceroxid, Ceroctoat, Cer-Siloxan-Verbindungen Eisenoxid, Eisenoctoat, Eisen-Siloxan-Verbindungen Zinkcarbonat, Mangancarbonat und Titanoxid.

Beispiele für verstärkende Füllstoffe sind vorzugsweise pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.
Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.
Enthalten sein können des weiteren Zusätze (D), die der gezielten Einstellung der Verarbeitungszeit, Anspringtemperatur und Vernetzungsgeschwindigkeit der erfindungsgemäßen Massen dienen. Diese Inhibitoren und Stabilisatoren sind auf dem Gebiet der additionsvernetzenden Massen sehr gut bekannt.
Beispiele gebräuchlicher Inhibitoren sind acetylenische Alkohole, wie 1-Ethinyl-1-cyclohexanol, 2-Methyl-3-butin-2-ol 3,5-Dimethyl-1-hexin-3-ol und 3-Methyl-1-dodecin-3-ol, Polymethylvinylcyclosiloxane, wie 1,3,5,7-Tetravinyltetramethyltetracyclosiloxan, niedermolekulare Siliconöle mit MethylvinylSiO_{2/2}-Gruppen und/oder R₂vinylSiO_{1/2-}Endgruppen, wie Divinyltetramethyldisiloxan, Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitorzusätze hängt von ihrer chemischen Struktur ab, so dass sie individuell bestimmt werden muss. Der Inhibitorgehalt beträgt aber vorzugsweise 0 bis 50 000 ppm, besonders bevorzugt 0 bis 1000 ppm, insbesondere 0 bis 100 ppm.

Die Herstellung der erfindungsgemäßen Formkörper geschieht derart, dass die Bestandteile (A), (B), (C) und gegebenenfalls Bestandteile (D) vermischt werden und anschließend bevorzugt bei 80 bis 220 °C, insbesondere 150 bis 190°C, in einer beheizten Gieß-, Spritzgieß-, Verdränger- oder Transferform vernetzt werden. Die Vernetzungszeit für die Formkörper ist abhängig von der Geometrie der Form und der Wandstärke der Formkörper, z.B. einer Backform und liegt bevorzugt zwischen 10 sec und 5 min. Anschließend wird die Siliconbackform in einem Ofen unter Luftzufuhr bei einer maximalen Temperatur von ca. 200°C für 4 Std. getempert.

Bei den erfindungsgemäßen Formkörpern handelt es sich vorzugsweise um elektronische Bauteile, Taucherbrillen, Schnuller, Brillenpads jegliche Verklebungen und Beschichtungen von transparenten Substraten, wie Glas und Polycarbonat, Schläuche, Profile, Dichtungen und Dämpfungselemente, usw.
Bevorzugt sind Lebensmittel-Gußformen, wie Backformen oder Formen für die Herstellung von Confiserieprodukten wie Pralinen.

Vorteile der Siliconelastomeren, die durch Additionsvernetzung in Gegenwart von Rhodium- und/oder Iridium-Verbindungen gewonnenen wurden, für die Herstellung von Backformen sind:
1) die freie Wahl der Geometrie des Formkörpers, bevorzugt eine Backform. Es sind auch starke Hinterschnitte möglich,
2) die glasartige Transparenz ermöglicht die direkte visuelle Kontrolle des Backguts (nicht invasiv)
3) Keine Gelb- und/oder Braunfärbung der vernetzten Siliconelastomere
4) Verarbeitungszeit ist auch ohne Verwendung von Inhibitoren ausgesprochen lange und
5) Die Vernetzung bei erhöhten Temperaturen ist sehr zügig.

Die Punkte 3) und 4) ermöglichen dem Verarbeiter einen großen Spielraum bei der Verarbeitung.

### Beispiel 1

In einem Laborkneter wurden 405 Teile eines Vinyldimethylsiloxy-terminierten Polydimethylsiloxans mit einer Viskosität von 20 Pa's vorgelegt, auf 150°C aufgeheizt und mit 366 Teilen einer hydrophoben pyrogenen Kieselsäure mit einer spezifischen Oberfläche nach BET von 300 m²/g und einem Kohlenstoffgehalt von 4,2 Gew.-% versetzt. Es entstand eine hochviskose Masse, die anschließend mit 229 Teilen des obengenannten Polydimethylsiloxans verdünnt wurde. Durch Kneten unter Vakuum (10 mbar) bei 150°C wurden während einer Stunde flüchtige Bestandteile entfernt. Diese Masse wird als Grundmasse 1 bezeichnet.

### Komponente A

906 Teile der Grundmasse 1 wurden im Kneter bei Raumtemperatur mit 7 Teilen eines Vinyldimethylsiloxy-terminierten Polydimethylsiloxans mit einer Viskosität von 20 Pa·s und 0,061 Teile Bis(triphenylphosphan)carbonylrhodium(I)chlorid (das entspricht 10 ppm Rhodium auf die Gesamtmasse der Komponente A), gelöst in Tetrahydrofuran, unter Vakuum homogen vermischt.

### Komponente B

931 Teile der Grundmasse 1 wurden auf einer Walze bei einer Temperatur von 25°C mit 55 Teilen SiH-Vernetzer zu einer homogenen Masse vermischt, wobei der SiH-Vernetzer ein Trimethylsiloxy-endständiges Methylhydrogenpolysiloxan, Me₃Si-(-O-SiH(Me))ₙ-O-SiMe₃, das gemäß ²⁹Si-NMR eine zahlenmittlere Kettenlänge von n=53 besitzt, war.

Vor der Vernetzung wurden die Komponenten A und B im Verhältnis 1 : 1 mit einem Laborrührer vermischt.

### Beispiel 2

Analog Beispiel 1 nur dass anstelle der Bis(triphenylphosphan)carbonylrhodium(I)chlorid /Tetrahydrofuran-Lösung 0,029 Teile Rhodium (III) acetylacetonat, gelöst in Dichlormethan, verwendet wurden.

### Beispiel 3

Analog Beispiel 1 nur dass anstelle der Bis(triphenylphosphan)carbonylrhodium(I)chlorid /Tetrahydrofuran-Lösung 0,021 Teile Carbonyltriphenylphosphanrhodium(I)acetylacetonat gelöst in Dichlormethan verwendet wurden.

### Vergleichsbeispiel 1

Die in Beispiel 1 beschriebene Arbeitsweise wird wiederholt mit der Abänderung, dass als Katalysator 16 ppm Platin als Platin-Divinyltetramethyldisiloxan-Komplex in Vinyl-terminiertem Polydimethylsiloxan (käuflich erhältlich bei ABCR GmbH & Co, Deutschland) verwendet wurden.

### Vergleichsbeispiel 2

Die in Beispiel 1 beschriebene Arbeitsweise wird wiederholt mit der Abänderung, dass als Katalysator 16 ppm Platin als Platin-Divinyltetramethyldisiloxan-Komplex in Vinyl-terminiertem Polydimethylsiloxan (käuflich erhältlich bei ABCR GmbH & Co, Deutschland) und 2 Teilen Ethinylcyclohexanol als Inhibitor verwendet wurden.

### Beispiel 4

589,4 Teile eines Vinyldimethylsiloxy-terminierten Polydimethylsiloxans mit einer Brabender-Plastizität von 630 mkp entsprechend einer mittleren Molmasse von ca. 500000 g/mol wurden mit 252,6 Masseteilen einer hydrophoben pyrogenen Kieselsäure mit einer Oberfläche nach BET von 300 m²/g und einem Kohlenstoffgehalt von 3,95 Gew.-%, die in Portionen zudosiert wurde, 4 Stunden in einem Kneter zu einer homogenen Masse vermischt.

500 Teile der so erhaltenen Grundmasse 2 wurden auf einer Walze bei einer Temperatur von 20°C mit 0,1 Teilen Inhibitor, 7,5 Teile SiH-Vernetzer und 2 Teilen Katalysatorbatch zu einer homogenen Masse vermischt, wobei als Inhibitor 1-Ethinyl-1-cyclohexanol eingesetzt wurde, und der SiH-Vernetzer ein Mischpolymerisat aus Dimethylsiloxy- und Methylhydrogensiloxy- und Trimethylsiloxy-Einheiten mit einer Viskosität von 310 mPa·s bei 2.5°C und einem Gehalt an Si-gebundenem Wasserstoff von 0,46 Gew.-% war. Der Katalysatorbatch wird hergestellt indem 200 Teile der oben beschriebenen Grundmasse 2 mit 1,8 Teilen Rhodium(II)octanoat-Dimer (in Dichlormethan gelöst) im Kneter 30 Minuten homogenisiert wurden.

### Vergleichsbeispiel 3

Die in Beispiel 4 beschriebene Arbeitsweise wird wiederholt mit den Abänderungen, dass als Katalysator 10 ppm Platin als Platin-Divinyltetramethyldisiloxan-Komplex in Vinyl-terminiertem Polydimethylsiloxan (käuflich erhältlich bei ABCR GmbH & Co, Deutschland) und 0,5 Teile Inhibitor (=1-Ethinyl-1-cyclohexanol) verwendet wurden.

Die thermischen Härtungseigenschaften der in den Beispielen 1 bis 4 sowie Vergleichsbeispielen 1 bis 3 (V1, V2, V3) hergestellten Siliconmassen wurden mit einem Goettfert-Elastograph gemessen und zwar 7 Std. nachdem die A- und B-Komponenten im Verhältnis 1:1 gemischt wurden. Beispiel 4 und Vergleichsbeispiel 3 wurden sofort nach dem Vermischen gemessen.
Zur quantitativen Ermittlung der Lagerbarkeit wurden die hergestellten Formulierungen bei Raumtemperatur (RT) gelagert, wobei die Zeitdauer (gemessen in Tagen) bis zur Verdoppelung des Anfangswertes der Viskosität ermittelt wurde. Die Messergebnisse werden in Tabelle 1 dargestellt.

**Tabelle 1:**

| Beispiele | 1 | 2 | 3 | V1 | V2 | 4 | V3 |
|---|---|---|---|---|---|---|---|
| a_{T} [°C] | 132 | 125 | 118 | -* | 120 | 135 | 122 |
| Lagerung bei RT | >10 d | >10 d | >10 d | <<1 d | <8 d | > 10 d | < 4d |

| | | | | | | | |
|---|---|---|---|---|---|---|---|
| -*: die Mischung war vor der Messung bereits vernetzt. | | | | | | | |
| d: Tage | | | | | | | |
| s: Sekunden | | | | | | | |

Die Anspringtemperatur a_{T} wurde mit einer Heizrate von 10°C/min bestimmt. Die Temperatur, die dem 4%-Wert des maximalen Drehmomentes entspricht, wurde als Anspringtemperatur definiert.
Die Bestimmung des t₅₀-Wertes erfolgte nach DIN 53529 T3. Die Dauer vom Beginn der Härtung bis 50% (t₅₀-Wert) des maximalen Drehmoments wurde dabei bei 150°C ermittelt.

Zum weiteren Vergleich wurden von den Siliconmassen vernetzte Siliconkautschuk-Folien hergestellt und die mechanischen Eigenschaften bestimmt. Die Herstellung der vernetzten Siliconkautschuke erfolgte dadurch, dass die Mischung des jeweiligen Beispiels in einer hydraulischen Presse bei einer Temperatur von 170°C während 10 Minuten zum Siliconkautschuk vernetzt wurde. Die entformten ca. 2 mm bzw. 6 mm dicken Siliconkautschukfolien wurden mechanischen Prüfungen unterworfen.
Das Ergebnis kann Tabelle 2 entnommen werden.

**Tabelle 2:**

| | Härte [Shore A] | RF [N/mm²] | RD [%] | Aussehen |
|---|---|---|---|---|
| Beispiel 1 | 58 | 11,8 | 570 | farblos, transparent |
| Beispiel 2 | 56 | 10,4 | 550 | farblos, transparent |
| Beispiel 3 | 60 | 11,0 | 580 | farblos, transparent |
| Vergleich V1 | -* | -* | -* | -* |
| Vergleich V2 | 60 | 10,8 | 580 | Leichte Gelbfärbung |
| Beispiel 4 | 37 | 12,3 | 1180 | farblos, transparent |
| Vergleich V3 | 39 | 13,0 | 1100 | Gelbstich |

| | | | | |
|---|---|---|---|---|
| -* bereits vorher vernetzt. | | | | |
| Härte: Shore-A-Härte wurde bestimmt gemäß DIN 53505, | | | | |
| RF: Reißfestigkeit wurde bestimmt gemäß DIN 53504-S1 | | | | |
| RD: Reißdehnung wurde bestimmt gemäß DIN 53504-S1 | | | | |

## Patentansprüche

1. Formkörper erhältlich durch additionsvernetzte Siliconelastomere in Gegenwart von zumindest einem Rhodium- oder Iridiumkatalysator oder Mischungen beider Katalysatorarten, wobei es sich bei dem Rhodiumkatalysator um [Rh(O₂CCH₃)₂]₂, Rh(O₂CCH₃)₃, Rh₂(C₈H₁₅O₂)₄, Rh(C₅HO₂)₃, Rh(C₅H₇O₂)(CO)₂, Rh(CO) [Ph₃P] (C₅H₇O₂), Rh(CO)₂ (C₅H₇O₂), RhCl₃ [(R)₂S]₃, (R²₃P)₂Rh(CO)X, (R²₃P)₃Rh(CO)H und Rh₂X₂Y₄ handelt, wobei X gleich Wasserstoff, Chlor, Brom oder Jod, Y gleich Ethyl, CO, C₈H₁₄ oder 0,5 C₉H₁₂, R gleich Alkylreste, Cycloalkylreste oder Arylreste und R² gleich Alkylreste oder Arylreste oder mit Sauerstoff substituierte Reste bedeuten und bei dem Iridiumkatalysator handelt es sich um Ir(OOCCH₃)₃, Ir (C₅H₇O₂)₃, [Ir (Z) (En)₂]₂ und [Ir (Z) (Dien)]₂, wobei Z gleich Chlor, Brom, Iod oder Alkoxy, En gleich Olefin und Dien gleich Cyclooctadien ist.

2. Formkörper nach Anspruch 1, **dadurch gekennzeichnet, dass** es sich bei dem Formkörper um Lebensmittel-Gussformen handelt.

3. Formkörper nach Anspruch 2, **dadurch gekennzeichnet, dass** es sich bei den Lebensmittel-Gussformen um Backformen handelt.

## Claims

1. Shaped bodies obtainable by addition-crosslinked silicone elastomers in the presence of at least one rhodium or iridium catalyst or mixtures of both catalyst types, the rhodium catalyst being [Rh(O₂CCH₃)₂]₂, Rh(O₂CCH₃)₃, Rh₂(C₈H₁₅O₂)₄, Rh(C₅H₇O₂)₃, Rh(C₅H₇O₂) (CO)₂, Rh(CO) [Ph₃P] (C₅H₇O₂), Ph(CO)₂(C₅H₇O₂), Rh RhCl₃[(R)₂S]₃, (R²₃P)₂Rh(CO)X, (R²₃P)₃Rh(CO)H and Rh₂X₂Y₄, where X is hydrogen, chlorine, bromine or iodine, Y is ethyl, CO, C₈H₁₄ or 0.5 C₈H₁₂, R is alky radicals, cycloalkyl radicals or aryl radicals and R² is alkyl radicals or aryl radicals, or oxygen-substituted radicals and the iridium catalyst being IR(OOCCH₃)₃, Ir(C₅H₇O₂)₃, [Ir(Z) (En)₂]₂ and (Ir(Z)(Dien)]₂, where Z is chlorine, bromine, iodine or alkoxy, En is olefin, and Dien is cyclooctadiene.

2. Shaped bodies according to Claim 1, **characterized in that** the shaped bodies are food moulds.

3. Shaped bodies according to Claim 2, **characterized in that** the food moulds are baking moulds.

## Revendications

1. Corps façonné pouvant être obtenu par des élastomères de silicone réticulés par addition en présence d'au moins un catalyseur de rhodium ou d'iridium ou de mélanges des deux types de catalyseur, où il s'agit, pour le catalyseur de rhodium, de [Rh(O₂CCH₃)₂]₂, Rh(O₂CCH₃)₃, Rh₂(C₈H₁₅O₂)₄, Rh(C₅H₇O₂)₃, Rh(C₅H₇O₂) (CO)₂, Rh(CO) [Ph₃P] (C₅H₇O₂), Rh (CO)₂(C₅H₇O₂), RhCl₃[(R)₂S]₃, (R²₃P)₂Rh(CO)X, (R²₃P)₃Rh(CO)H et Rh₂X₂Y₄, X signifiant hydrogène, chlore, brome ou iode, Y signifiant éthyle, CO, C₈H₁₄ ou 0,5 C₈H₁₂, R signifiant des radicaux alkyle, cycloalkyle ou aryle et R² signifiant des radicaux alkyle ou aryle ou des radicaux substitués par oxygène et, pour le catalyseur d'iridium, de Ir(OOCCH₃)₃, Ir(C₅H₇O₂)₃, [Ir(Z)(En)₂]₂ et [Ir(z)(diène)]_{2,} Z représentant chlore, brome, iode ou alcoxy, En représentant oléfine et diène représentant cyclooctadiène.

2. Corps façonné selon la revendication 1, **caractérisé en ce qu'**il s'agit, pour le corps façonné, de moules pour aliments.

3. Corps façonné selon la revendication 2, **caractérisé en ce qu'**il s'agit, pour les moules pour aliments, de moules de cuisson.
